# EUROPÄISCHE PATENTSCHRIFT

(11) **EP 1 466 086 B1**
(45) Veröffentlichungstag und Bekanntmachung des Hinweises auf die Patenterteilung: **13.02.2008**
(21) Anmeldenummer: 02792622.9
(22) Anmeldetag: 29.11.2002
(51) Int. Cl.: F02M 47/02, F02M 59/46

(54) **STEUERTEIL F R INJEKTOREN MIT SCHALTBARER D SENNADEL**
CONTROL ELEMENT FOR INJECTORS WITH SWITCHED INJECTOR PIN
PIECE DE COMMANDE DESTINEE A DES INJECTEURS A AIGUILLE D'INJECTEUR MANOEUVRABLE

(30) Priorität: 09.01.2002 DE 10200531
(43) Veröffentlichungstag der Anmeldung: 13.10.2004
(73) Patentinhaber: ROBERT BOSCH GMBH, 70442 Stuttgart (DE)
(72) Erfinder: POTSCHIN, Roger, 74336 Brackenheim (DE); GRABANDT, Peter, 71686 Remseck (DE)
(74) Vertreter: Hörschler, Wolfram Johannes
(86) Internationale Anmeldenummer: PCT/DE2002/004387
(87) Internationale Veröffentlichungsnummer: WO 2003/058052

(56) Entgegenhaltungen:
- WO-A-95/25888
- DE-A- 10 026 642
- DE-A- 10 064 790
- DE-A- 19 837 890
- DE-A- 19 939 447
- DE-C- 4 236 882
- DE-U- 29 708 369
- US-A- 4 603 671

## Beschreibung

### Technisches Gebiet

Bei luftverdichtenden Verbrennungskraftmaschinen kommen zunehmend Kraftstoffeinspritzsysteme zum Einsatz, die zum Beispiel Injektoren umfassen, die über einen Hochdrucksammelraum (Common Rail) oder Injektoren mit Druckübersetzern oder Pumpe-Düse-Systemen mit Kraftstoff versorgt werden. Die aufgezählten Kraftstoffeinspritzsysteme umfassen überwiegend 2/2-Wege-Ventile, die in der Regel nicht druckausgeglichen sind.

### Stand der Technik

DE 199 39 447 A1 offenbart eine Einrichtung zum Einspritzen von Kraftstoff in einen Brennraum eines Verbrennungsmotors, welche einen extern betätigbaren Druckerzeuger, einen in den Brennraum ragenden Injektor und eine den Druck im Injektor regelnde Steuereinheit aufweist. Letztere umfasst einen extern ansteuerbaren, piezoelektrischen Aktor zur Betätigung eines Ventilglieds. Die Steuereinheit ist als Proportionalventil ausgeführt, das mit Hilfe des Ventilglieds zwei Ventilsitze steuert. Diese regeln Druckmittelverbindungen zwischen drei Kanälen. Zudem ist das Ventilglied druckausgeglichen geführt, so dass die Einrichtung zur Einspritzung von Kraftstoff mit einem besonders kompakt bauenden Aktor auskommt.

EP 0 987 431 A2 hat einen Kraftstoffinjektor für Verbrennungskraftmaschinen zum Gegenstand. Der Kraftstoffinjektor umfasst eine Düsennadel, die innerhalb einer Bohrung im Injektorgehäuse vertikal bewegbar aufgenommen ist. Eine Fläche der Düsennadel begrenzt zum Teil eine Steuerkammer, die über eine Einschnürstelle mit einer Versorgungsleitung in Verbindung steht. Mittels eines Steuerventils wird die Verbindung zwischen der Steuerkammer und einem Niederdruckbereich gesteuert. Ferner ist ein Ventil vorhanden zur Verbindung zwischen der Versorgungsleitung und dem Niederdruckbereich. Dieses Ventil und das Steuerventil enthalten jeweils Ankerteile, die mittels eines beiden Ventilen gemeinsamen elektromagnetischen Stellers betätigbar sind.

EP 1 081 373 A2 hat ebenfalls einen Kraftstoffinjektor zum Gegenstand. Dieser wird in einer Anordnung eingesetzt, die eine Kraftstoffpumpe, eine Pumpkammer und ein erstes Ventil umfasst, wobei dieses erste Ventil die Verbindung zwischen der Pumpkammer und einem Niederdruckbereich steuert. Der Injektor enthält eine Düsennadel, welche mit einem Nadelsitz in Wirkverbindung bringbar ist. Eine Steuerkammer ist derart angeordnet, dass der in dieser herrschende Fluiddruck die Düsennadel in deren Nadelsitz drängt. Mittels eines Steuerventils wird der Fluiddruck innerhalb der Steuerkammer gesteuert. Das Steuerventil seinerseits wird über eine Betätigungsanordnung derart gesteuert, dass bei nicht aktivierter Betätigungsanordnung das Steuerventil eine Fluidverbindung zwischen der Steuerkammer und dem Niederdruckbereich freigibt.

Dokument DE 100 26 642 A offenbart ein Kraftstoffeinspritzventil mit einem zweiteiligen Ventil. Das zweiteilige Ventil weist einen Sitzabschnitt und einen Längschieberabschnitt auf.

Bei der Lösung gemäß EP 1 081 373 A2 kommen 2/2-Wege-Ventile auslassseitig in Bezug auf einen Steuerraum zum Einsatz. Der Einsatz solcher 2/2-Wege-Ventile auf der Einlassseite eines Steuerraumes, der einen die Düsennadel mittelbar betätigenden Steuerkoben beaufschlagt, ist aufgrund der erforderlichen hohen Betätigungskräfte ungünstig.

### Darstellung der Erfindung

Die erfindungsgemäß vorgeschlagene Lösung stellt ein druckausgeglichenes 3/2-WegeVentil bereit, welches geringe Betätigungskräfte verglichen mit dem aus dem Stande der Technik bekannten Lösungen erfordert. Daher lässt sich die erfindungsgemäß vorgeschlagene Lösung besonders vorteilhaft hochdruckseitig vor dem Steuerraum eines die Düsennadel mittelbar betätigenden Steuerkolbens oder unmittelbar vor dem Steuerraum anordnen. In vorteilhafter Ausgestaltung des Ventilkörpers des 3/2-Wege-Ventils umfasst dieser einen Schieberabschnitt und einen Sitzabschnitt, sei es dass der Ventilkörper des 3/2-Wege-Ventils in einer Anordnung als I-Ventil oder in einer Anordnung als A-Ventil eingesetzt wird.

Wird das 3/2-Wege-Ventil an einem Steuerkolben eingesetzt, über welchen die Düsennadel gesteuert wird und ist dieser Steuerkolben mit Druck beaufschlagt, kann die Einspritzdüse auch unter Druck geschlossen werden. Mittels des 3/2-Wege-Ventiles lässt sich die Steuerung des Drucks über dem Steuerkolben vornehmen. Sowohl die Ventilkörper des 3/2-Wege-Ventiles in I-Anordnung als auch die Ventilkörper von 3/2-Wege-Ventilen in A-Anordnung sind mit derart konfigurierten hydraulischen Flächen versehen, dass eine Druckausgeglichenheit des Ventilkörpers ermöglicht wird. Die Druckausgeglichenheit des Ventilkörpers ermöglicht den Einsatz kleiner Betätigungskräfte, d. h. die erfindungsgemäß konfigurierten Ventilkörper können mittels eines Magnetventiles ohne Zwischenschaltung eines Druckübersetzers zur Vergrößerung der Hubwege bewegt werden. Die Ventilkörper umfassen darüber hinaus jeweils einen Sitzabschnitt sowie einen Längsschieberabschnitt. Mittels des Sitzabschnittes der Ventilkörper lässt sich die Hochdruckseite des 3/2-Wege-Ventiles verschließen, so dass keine Druckverluste auftreten.

Die Ventilkörper weisen eine geringe Masse auf und erlauben daher kürzeste Schaltzeiten; das Erreichen geringer Schaltzeiten wird zudem durch die Druckausgeglichenheit der Ventilkörper unterstützt. Insbesondere bei Einsatz des 3/2-Wege-Ventiles in I-Anordnung wird die Öffnungsbewegung der Ventilnadel unterstützt, da der Ventilkörper gemäß dieser Anordnung in den Druckraum öffnet.

Die Bauform des Ventilkörpers mit Sitzabschnitt und Längsschieberabschnitt erlaubt eine einfache Fertigung des Ventilkörpers in der Großserienproduktion.

### Zeichnung

Anhand der Zeichnung wird die Erfindung nachstehend eingehender erläutert.

Es zeigt:
- Figur 1: eine Ausführungsvariante eines 3/2-Wege-Ventiles in A-Anordnung, d. h. aus einem Druckraum ausfahrend,
- Figur 2: eine weitere Ausführungsvariante eines 3/2-Wege-Ventiles in A-Anordnung,
- Figur 3: das schematische hydraulische Schaltbild der weiteren Ausführungsvariante gemäß Figur 2 und
- Figur 4: die Ausführungsvariante eines 3/2-Wege-Ventiles in I-Anordnung, d. h. in einen Druckraum einfahrend.

### Ausführungsvarianten

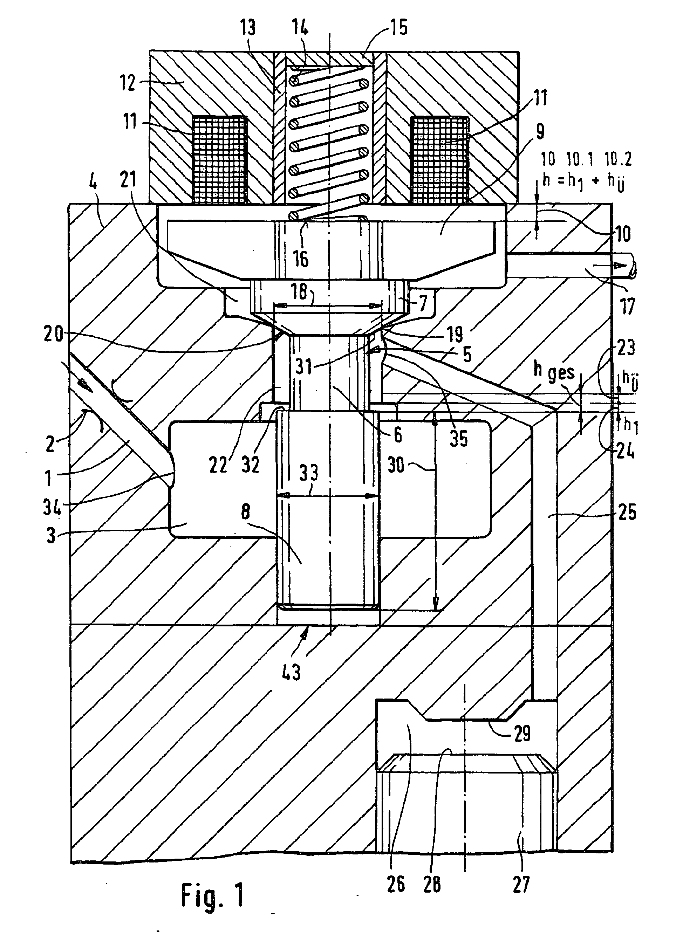

Figur 1 ist eine Ausführungsvariante eines 3/2-Wege-Ventiles zu entnehmen, welches in A-Anordnung ausgeführt ist und einen die Düsennadel beaufschlagenden Steuerkolben betätigt.

In der in Figur 1 wiedergegebenen Anordnung wird ein Steuerraum 26, der einen Steuerraum 27 druckbeaufschlagt, mittels eines 3/2-Wege-Ventiles 5 druckentlastet bzw. druckbeaufschlagt. Über die mittelbare Betätigung einer Düsennadel über einen Steuerkolben 27 kann ein Schließen der Düsennadel auch unter Druck erfolgen, was bei Einspritzvorgängen erwünscht sein kann.

Über einen Hochdruckzulauf 1, der an einer Mündungsstelle 34 in eine Ringkammer 3 mündet, wird diese mit unter hohem Druck stehenden Kraftstoff vom hier nicht dargestellten Hochdrucksammelraum (Common Rail) eines Einspritzsystemes mit Druck beaufschlagt. Anstelle eines Hochdrucksammelraumes kann der Hochdruckzulauf 1 auch über eine Hochdruckpumpe direkt beaufschlagt sein. Der Hochdruckzulauf 1 kann mit einer Zulaufdrossel 2 - wie in Figur 1 schematisch angedeutet - versehen sein. Die Ringkammer 3 ist innerhalb des Gehäuses 4 eines Injektorkörpers ausgebildet.

Die in Figur 1 dargestellte Ausführungsvariante eines 3/2-Wege-Ventiles 5 umfasst einen Ventilkörper 6, der einen Sitzabschnitt 7 sowie einen Längsschieberabschnitt 8 umfasst. In der Ausführungsvariante des Ventilkörpers 6 gemäß Figur 1 befindet sich der Sitzabschnitt 7 oberhalb des Längsschieberabschnittes 8. Oberhalb des Sitzabschnittes 7 des Ventilkörpers 6 der Ausführungsvariante gemäß Figur 1 ist eine Ankerplatte 9 am Ventilkörper 6 ausgebildet, welche die Stirnfläche des Ventilkörpers 6 bildet. Oberhalb der Ankerplatte 9, von dieser um ein Spaltmaß 10 (h) beabstandet, befindet sich ein Spulengehäuse 12, welches eine ringförmig konfigurierte Magnetspule 11 aufnimmt. Das Spulengehäuse 12 umfasst ferner einen hülsenförmigen Einsatz 13, der eine Druckfeder 14 umschließt. Die Druckfeder ist am oberen Ende des Spulengehäuses 12 durch eine Einstellscheibe 15 abgestützt, der in das Innere des hülsenförmigen Körpers 13 eingelassen ist. Das andere Ende der vorzugsweise als Spiralfeder ausgebildeten Druckfeder 14 stützt sich auf einer Anlagefläche 16 der Ankerplatte 9 ab, die um das Spaltmaß 10 (h) von der Stirnseite der Magnetspule 11 im Spulengehäuse 12 beabstandet ist. Das Spaltmaß 10 setzt sich aus einem Anteil 10.1 (h₁) und einem zweiten Anteil (h_{Ü}), gekennzeichnet durch Bezugszeichen 10.2, zusammen; mit h_{RL} ist der Anteil des Spaltmaßes 10 bezeichnet, der sich aus dem notwendigen Restluftspalt ergibt. Während h₁ den Vorhub charakterisiert, bis die Steuerkanten auf gleicher Höhe stehen und sich eine Dichtwirkung ergibt, ist der zweite Anteil h_{Ü} das Maß für die Überdeckung. Aus beiden Anteilen h₁ und h₀ ergibt sich der Gesamthub.

Der Sitzabschnitt 7 des Ventilkörpers 6 der Ausführungsvariante des 3/2-Wege-Ventiles 5 ist innerhalb des Gehäuses 4 von einer topfförmig konfigurierten Ausnehmung 21 umschlossen. Oberhalb der topfförmigen Ausnehmung 21 zweigt, im seitlich von der Ankerplatte 9 orientiert, ein Niederdruckablauf 17 ab, durch welchen abgesteuertes Kraftstoffvolumen in den Niederdruckbereich des Kraftstoffeinspritzsystemes, wie zum Beispiel den Fahrzeugtank, abströmt. Innerhalb des Sitzabschnittes 7 des Ventilkörpers 6 ist ein Sitzdurchmesser 18 ausgebildet, der mit einer im Gehäuse 4 ausgebildeten Sitzfläche 19 eines Ventilsitzes 20 zusammenwirkt. Mittels dieses Sitzabschnittes 7 kann ein Ringraum 22 unterhalb des Sitzabschnittes 7 abgedichtet werden, so dass keine hochdruckseitigen Druckverluste in dem Niederdruckbereich 17 des 3/2-Wege-Ventiles 5 auftreten können. Innerhalb des Gehäuses 4 des 3/2-Wege-Ventiles 5 erstreckt sich der Ringraum 22 vom Sitzabschnitt 7 bis zu einer Steuerkante für den Längsschieberabschnitt 8. Der Längsschieberabschnitt 8 ist in einer Schieberabschnittlänge 30 ausgebildet, sein Durchmesser 33 entspricht dem Sitzdurchmesser 18 im unteren Bereich des Sitzabschnittes 7 des Ventilkörpers 6. Die den Ringraum 22 innerhalb des Gehäuses 4 des 3/2-Wege-Ventiles 5 begrenzenden hydraulischen Flächen 31 und 32 sind hinsichtlich ihrer hydraulischen Flächen identisch, so dass der Ventilkörper 6 des 3/2-Wege-Ventiles druckausgeglichen ist. Darüber hinaus zweigt vom Ringraum 22 innerhalb des Gehäuses 4 eine Steuerraumleitung 25 ab, die in der Darstellung gemäß der Ausführungsvariante gemäß Figur 1 drosselstellenfrei ausgebildet ist. Die Steuerraumleitung 25 mündet in einer Steuerraumwand 29 in den Steuerraum 26. Der Steuerraum 26, der ebenfalls im Gehäuse 4 ausgebildet ist, umschließt eine obere Stirnseite 28 eines Steuerkolbens 27, mit dem eine hier nicht dargestellte Düsennadel mittelbar betätigbar ist.

Die im Gehäuse 4 ausgebildete Ringkammer 3 umschließt den Längsschieberabschnitt 8 des Ventilkörpers 6, wobei im oberen Bereich der Ringkammer 3 eine Ausnehmung eingelassen ist. In diese Ausnehmung taucht die die schieberseitige Steuerkante bildende hydraulische Fläche 32 bei Ansteuerung der Magnetspule 11 ein. Der sich aus den Anteilen h₁ und h_{Ü} zusammensetzende Gesamthub des Ventilkörpers 6 wird schnellstmöglich durchfahren. Durch die Bestromung der Magnetspule 11 wird die Ankerplatte 9 angezogen und der Ventilkörper 6 nach oben bewegt. Das einem Öffnungshubweg h₁ (Bezugszeichen 24) entsprechende erste Spaltmaß 10.1 wird bei Erregung der Magnetspule 11 überbrückt, so dass der Sitzabschnitt 7 aus seinem Ventilsitz 20 ausfährt und Druck aus dem Steuerraum 26 in die Niederdruckleitung 17 entweicht. Die Abflussmenge kann optional durch eine hier nicht dargestellte Drossel begrenzt werden. Bei weiterem Hub der Ankerplatte 9 des Ventilkörpers 6 gemäß eines zweiten Anteils des Spaltmaßes 10.2, d. h. entsprechend des Hubweges h_{Ü} (vergleiche Bezugszeichen 23, Überdeckungshub h_{Ü}) erfolgt eine Überdekkung der von der im Gehäuse 4 ausgebildeten Steuerkante mit der Steuerkante der im oberen Abschnitt des Längsschieberabschnittes 8 ausgebildeten hydraulischen Fläche 32. Entsprechend der eingestellten Überdeckung 23 h_{Ü} wird der Hochdruck, der in der Ringkammer 3 über den Hochdruckzulauf 1 von der Hochdruckquelle aus ansteht, vollständig abgeschlossen. Eine auftretende Leckage aus dem Hochdruckzulauf hat keinen Einfluss auf das Verhalten des Steuerraumes, da der geöffnete Querschnitt des Sitzabschnittes 7 im oberen Bereich des Ventilkörpers 6 des 3/2-Wege-Ventiles 5 demgegenüber sehr groß ist.

Bei Abschaltung der Magnetspule 11 durch ein in Figur 1 nicht dargestelltes Steuergerät erfolgt die Rückstellung des Ventilkörpers 6 in die Nullstellung. Dies wird durch die Rückstellfeder 14 erreicht, welche die an der Ankerplatte 9 ausgebildete Anschlagfläche 16 beaufschlagt und den Ventilkörper 6 der Ausführungsvariante des 3/2-Wege-Ventiles 5 gemäß Figur 1 wieder zurückstellt.

Die in Figur 1 dargestellte Ausführungsvariante des 3/2-Wege-Ventiles 5 ist in A-Anordnung 43 gewählt, bei welcher der Ventilkörper 6 aus dem Druckraum, hier Ringkammer 3, ausfahrend öffnet. Die in Figur 1 dargestellte Ausführungsvariante des 3/2-Wege-Ventiles 5 ist in den Schaltstellungen druckausgeglichen, d. h. die dem Druck ausgesetzten wirksamen hydraulischen Flächen 31 bzw. 32 am Ventilkörper 6 und daraus resultierende Kräfte heben sich in ihrer Wirkung auf, so dass durch den Einsatz von Magnetspulen 11 enthaltenden Elektromagneten schnelle, kurze Schaltzeiten bei ausreichenden Hüben erreichbar sind.

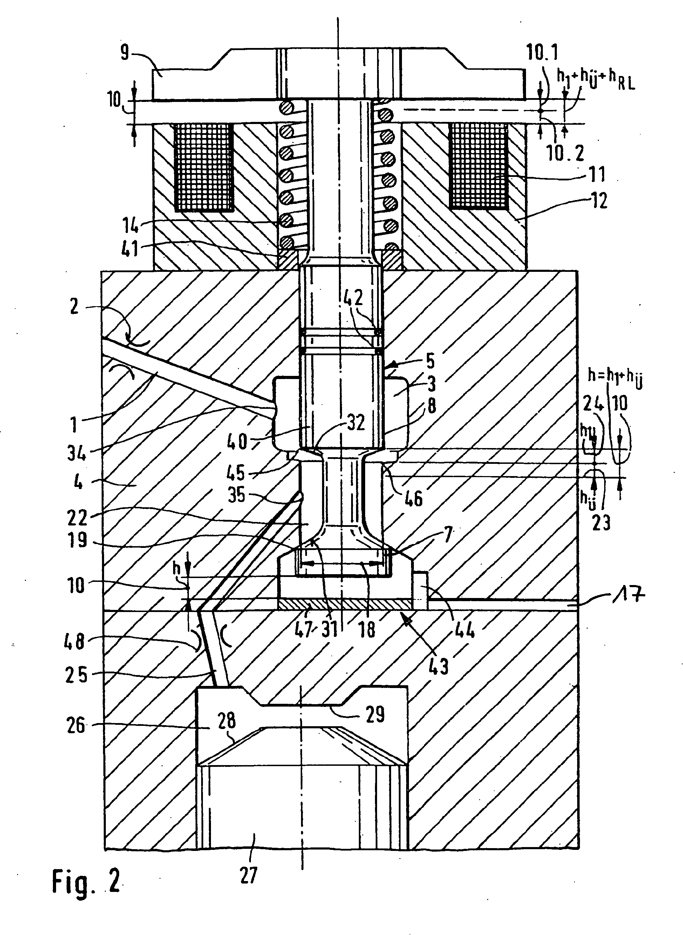

Figur 2 zeigt eine weitere Ausführungsvariante eines 3/2-Wege-Ventiles, ebenfalls in A-Anordnung.

Gemäß der in Figur 2 dargestellten Ausführungsvariante eines 3/2-Wege-Ventiles 5 sind am Ventilkörper 40 der Sitzabschnitt 7 und der Längsschieberabschnitt 8 einander - gegenüber der Darstellung in Figur 1 - vertauscht.

Gehäuse 4 des 3/2-Wege-Ventiles 5 gemäß der weiteren Ausführungsvariante in Figur 2 mündet der Hochdruckzulauf 1 in der Ringkammer 3 des Gehäuses 4. An die Ringkammer 3 schließt sich innerhalb des Gehäuses 4 der Ringraum 22 an. Vom Ringraum 22 zweigt an einer Mündungsstelle 35 eine Steuerraumleitung 25 ab, die optional eine Drosselstelle 48 enthalten kann. Die Steuerraumleitung 25 mündet innerhalb der Steuerraumwand 29 in den Steuerraum 26, der teilweise von der Stirnfläche 28 des Steuerkolbens 27 begrenzt ist.

Gemäß der weiteren Ausführungsvariante in Figur 2 befindet sich im Bereich oberhalb der Ringkammer 3 im Gehäuse 4 das Spulengehäuse 12 mit darin eingelassener Magnetspule 11. Analog zur Ausführungsvariante gemäß Figur 1 ist zwischen einer mit dem Ventilkörper 40 in Verbindung stehenden Ankerplatte 9 und der dieser zuweisenden Stirnseite der Magnetspule 11 ein Spaltmaß 10 eingestellt, welches einen ersten Spaltmaßanteil 10.1 sowie einen zweiten Spaltmaßanteil 10.2 umfasst (analog zur Ausführungsvariante gemäß Figur 1); mit h_{RL} ist der Restluftspalt bezeichnet. Ein verjüngter Bereich des Ventilkörpers 40 ist von einer Druckfeder 14 umschlossen, die sich mit ihrem einen Ende an einem die Ankerplatte 9 aufnehmenden Teil des Ventilkörpers 40 abstützt, während das andere Ende der Rückstellfeder 14 auf einer Federvorspannkraft-Einstellscheibe 41 aufliegt, welche in eine Zentralbohrung des Magnetspulengehäuses 12 eingefügt ist.

Zur Stabilisierung der zentrischen Lage des Ventilkörpers 40 sind zwischen der Federvorspannkraft-Einstellscheibe 41 und der Ringkammer 3 an der Umfangsfläche des Ventilköpers 40 ein oder mehrere Nuten ausgebildet.

Analog zur Darstellung der Ausführungsvariante gemäß Figur 1 wird in der Ausführungsvariante des 3/2-Wege-Ventiles 5 gemäß Figur 2 die Ringkammer 3 im Gehäuse 4 von Längsschieberabschnitt 8 im Wesentlichen durchsetzt, an welchem eine in eine Bohrung innerhalb des Gehäuses einfahrende kegelförmig konfigurierte hydraulische Fläche 32 ausgebildet ist. Dieser hydraulischen Fläche 32 des Längsschieberabschnittes 8 liegt am unteren Ende des Ventilkörpers 40 ein Sitzabschnitt 7 gegenüber, der seinerseits eine hydraulische Fläche 31 umfasst. Mittels des Sitzabschnittes 7 wird entsprechend des durch die Magnetspule 11 eingestellten Hubs des Ventilkörpers 40 innerhalb des Gehäuses 4 der Ventilsitz 20 geschlossen, so dass ein Abströmen von Hochdruck über den Ringraum 22 in den Leckölablauf 44 ausgeschlossen ist. Unterhalb der Stirnseite des Sitzabschnittes 7 ist ein plattenförmiger Einsatz 47 dargestellt, der den Maximalhub, d. h. eine das Spaltmaß 10 übersteigende vertikale Hubbewegung des Ventilkörpers 40 innerhalb des Gehäuses 4 verhindert.

Entsprechend der Erregung der Magnetspule 11, d. h. je nach Stärke der Magnetkraft, fährt der Ventilkörper 40 in die Bohrung innerhalb des Gehäuses 4 ein. Bei einer Einfahrbewegung entsprechend des 1. Spaltmaßanteiles 10.1 kommt es zu einem Öffnen des Ventilsitzes 20 im Sitzabschnitt 7 des Ventilkörper 40, so dass der Steuerraum 26 leckölseitig entlastet wird. Es erfolgt eine Abwärtsbewegung des Ventilkörpers 40 des 3/2-Wege-Ventiles 5 gemäß der weiteren Ausführungsvariante in Figur 2 in Richtung auf den den Maximalhub begrenzenden Einsatz 47. Bei einer vertikalen Abwärtsbewegung entsprechend des zweiten Spaltmaßanteiles 10.2 kommt es zwischen dem Sitzschieberabschnitt 8, bzw. der an diesem ausgebildeten hydraulischen Fläche 32 und einer gehäuseseitigen Steuerkante 46 zu einer Überdeckung in einer Überdeckungshublänge 23 (h_{Ü}). Die Kante 45 der hydraulischen Fläche 32 im unteren Bereich des Sitzschieberabschnittes 8 des Ventilkörpers 40 dichtet bei Überdeckung der gehäuseseitigen Steuerkante 46 entsprechend des Überdekkungshubes 23 den Hochdruckzulauf 1, die Ringkammer 3 gegen den Ringraum 22 innerhalb des Gehäuses 4 ab. Wird die Magnetspule 11 im Spulengehäuse 12 abgeschaltet, folgt die Rückstellung des Ventilkörpers 2 aufgrund der Wirkung der Rückstellfeder 14 welche zwischen Ankerplatte 9 und Stützscheibe 41 am Gehäuse 4 eingelassen ist und den im unteren Bereich des Ventilkörpers 40 ausgebildeten Sitzabschnitt 7 in seine gehäuseseitige Sitzfläche 19 einfährt. In dieser Nullstellung des 3/2-Wege-Ventiles 5, gemäß der Ausführungsvariante in Figur 2, ist der Leckölablauf 44 verschlossen.

Auch die in Figur 2 dargestellte weitere Ausführungsvariante eines 3/2-Wege-Ventils ist in A-Ventil-Anordnung ausgebildet, d. h. der Ventilkörper 40 öffnet aus einem Druckraum, im vorliegenden Falle der Ringkammer 3 innerhalb des Gehäuses 4. Zur Herbeiführung eines Druckausgleiches entsprechen der Sitzdurchmesser 18 des Sitzabschnittes 7 des Ventilkörpers 40 und der Durchmesser des Längsschieberabschnittes 8 des Ventilkörpers 40 einander.

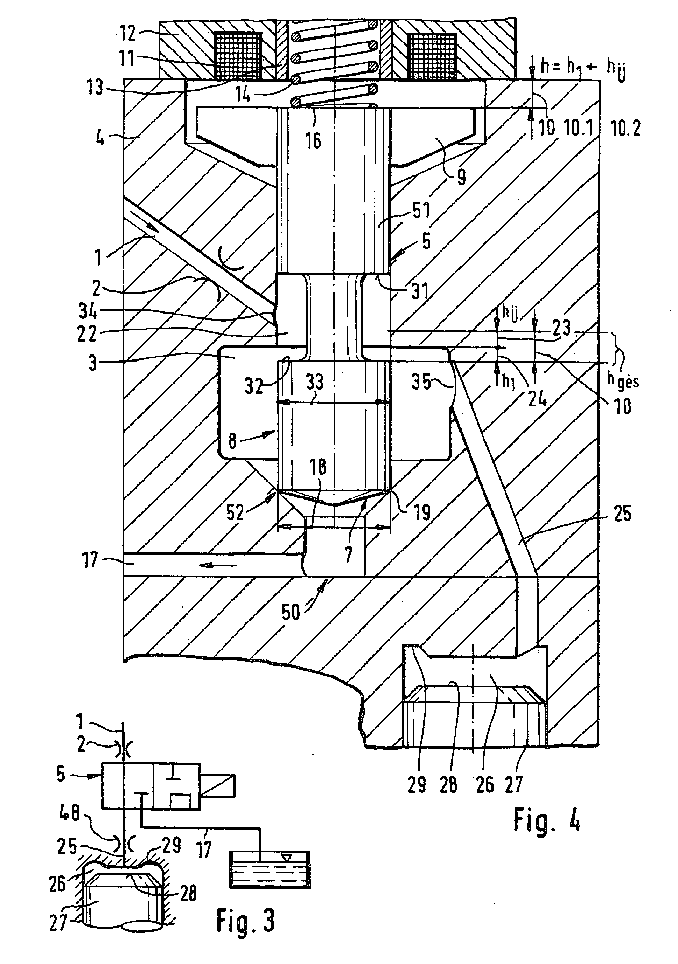

Figur 3 zeigt das schematisch vereinfachte, hydraulische Schaltbild der weiteren Ausführungsvariante gemäß Figur 2 und optional vorzusehende Drosselstellen.

In Figur 3 ist das 3/2-Wege-Ventil als schematisches Blockschaltbild wiedergegeben. Dem Hochdruckzulauf 1 ist optional eine Drosselstelle 2 zugeordnet, ebenso wie die in dieser gegenüberliegenden Steuerraumzuleitung 25 eine optional vorsehbare Drosselstelle 48 integriert sein kann, mit welchem während der Druckentlastung des Steuerraumes 26 in den Niederdruckbereich 17 die abströmende Kraftstoffmenge begrenzbar ist. Die Steuerraumleitung 25 mündet an einer oberen Begrenzungswand 29 in den Steuerraum 26. Der Steuerraum 26 wird teilweise von der Stirnfläche 28 des Steuerkolbens 27 bzw. einer Düsennadel begrenzt. Bei der Ausführung des Steuerkolbens 27 als ein der Düsennadel vorgeschalteter Kolben, kann die Düse geschlossen bleiben bzw. kann auch unter Druck geschlossen werden. Die Steuerung des Druckes über dem Kolben 27 ist die Aufgabe des 3/2-Wege-Ventiles 5. In der Darstellung gemäß Figur 3 ist darüber hinaus der Niederdruckablauf 17 eingezeichnet, über welche vom Steuerraum 26 abfließende Absteuermenge in einen hier nur schematisch wiedergegebenen Niederdruckbereich eines Kraftfahrzeuges wie z. B. einen Kraftstofftank zurückströmt.

Figur 4 zeigt die Ausführungsvariante eines 3/2-Wege-Ventiles in I-Anordnung, d. h. ein Ventil, welches in den Druckraum einfährt.

Gemäß dieser Ausführungsvariante einer I-Ventil-Anordnung 50 eines 3/2-Wege-Ventiles 5, befinden sich dessen Sitzabschnitt 7 bzw. dessen Längsschieberabschnitt 8 gemeinsam am unteren Endbereich eines Ventilkörpers 51 des 3/2-Wege-Ventiles 5. Im oberen Bereich des Ventilkörpers 51 ist eine Magnetspule 11 aufgenommen, die von einem Spulengehäuse 12 umschlossen ist. In einem Spaltmaß 10 (h) ist eine Ankerplatte 9 des Ventilkörpers 51 von der unteren Stirnseite der Magnetspule 11 beabstandet. Der Gesamthub zwischen der der Ankerplatte zuweisenden Stirnseite der Magnetspule 11 und der Ankerplatte 9 ist durch den Doppelpfeil 10 gekennzeichnet und setzt sich aus einem ersten Spaltmaß 10.1 und einem zweiten Spaltmaß 10.2 zusammen. Das erste Spaltmaß 10.1 entspricht dem Öffnungshub h₁, auch Bezugszeichen 23, während das zweite weiterhin angegebene Spaltmaß 10.2 dem Hub h_{Ü} entspricht.

Im mittleren Bereich des Ventilkörpers 51 des 3/2-Wege-Ventiles 5 in I-Anordnung 51 liegen beidseits eine Ringkammer 22 innerhalb des Gehäuses 4 hydraulische Flächen 31 bzw. 32 einander gegenüber. Durch die Ausbildung der hydraulischen Flächen 31 und 32 in identischer Fläche ist eine Druckausgeglichenheit des Ventilkörpers 51 des 3/2-Wege-Ventiles 5 erzielbar, welcher geringste Stellkräfte und kürzeste Schaltzeiten ermöglicht.

Gemäß dieser Ausführungsvariante wird die Entlastung des Steuerraumes 26 über die Steuerungzuleitung 25 in den Niederdruck 17 bei Ansteuerung des als Aktor dienenden Elektromagneten 11 gemäß eines Öffnungshubes h₁ (Bezugszeichen 24) eingeleitet. In diesem Zustand öffnet der Kegelsitz 52 im unteren Bereich des Ventilkörpers 51, während der Hochdruckzulauf durch Auffahren der hydraulischen Fläche 32 im oberen Bereich des Längsschieberabschnittes 8 des Ventilkörpers 51 in den Ringraum 22 den Hochdruckzulauf 1 verschließt. Je größer das Maß der Überdeckung 24 h_{Ü} desto dichter ist der Abschluss der Ventilräume 3 gegen den anstehenden Hochdruck. Wird der Ventilkörper 51 bei Erregung der Magnetspule 11 entsprechend des Öffnungshubes h₁ (Bezugszeichen 24) geöffnet, fährt der Sitzdurchmesser 18 des Kegelsitzes 52 nach oben in der Ringkammer 3 auf, so dass Kraftstoff vom Steuerraum 26 über die Steuerraumleitung 25 und die Ringkammer 3 in den Niederdruckbereich 17 abzuströmen vermag.

Die in Figur 4 dargestellte I-Ventil-Anordnung 50 des erfindungsgemäß konfigurierten 3/2-Wege-Ventiles 5, erlaubt darüber hinaus ein Öffnen in den Druckraum wodurch die Öffnungsbewegungen von Ventilnadeln bzw. Steuerraum 27 unterstützt werden, was die Schaltzeiten zusätzlich verkürzt.

Bei beiden Varianten, d. h. A-Ventil-Anordnung 43 bzw. I-Ventil-Anordnung 50 sind die Ventilkörper 6, 40, 51 in den jeweiligen Schaltstellungen des 3/2-Wege-Ventiles 5 druckausgeglichen. Die dem Druck jeweils ausgesetzten Flächen 31, 32 und daraus resultierende Stellkräfte heben sich in ihrer Wirkung auf. Die Betätigung des vorgeschlagenen 3/2-Wege-Ventiles 5 kann einerseits durch einen Aktor erfolgen, der als Magnetspule 11 ausgebildet ist, andererseits lassen sich durchaus auch an weitere schnellschaltende Aktoren z. B. Piezoaktoren einsetzen. Bei Piezoaktoren ist zur Sicherstellung eines ausreichenden Hubes 10, welcher den Teil über Öffnungshub h₁ (24) und Überdeckungshub h_{Ü} (Bezugszeichen 23) abdeckt, für eine Übersetzung hinsichtlich des Erreichens des erforderlichen Hubweges Sorge zu tragen, beispielsweise in Gestalt eines Druckübersetzers oder dergleichen.

Die erfindungsgemäß beschaffenen 3/2-Wege-Ventile 5 lassen sich an solchen Injektoren einsetzen, an denen der Düsennadelhub gesteuert wird, wie z. B. Common Rail Injektoren oder Pumpe-Düse-Einheiten.

## Patentansprüche

1. Einrichtung zur Betätigung eines Steuerkolbens/einer Düsennadel (27), über einen Steuerraum (26), der über eine Steuerraumleitung (25) mit Ventilräumen (3, 22) eines 3/2-Wege-Ventiles (5) verbunden ist, dessen Ventilkörper (6, 40, 51) mittels eines Aktors (11) schaltbar ist, ferner durch eine Rückstellfeder (14) druckbeaufschlagt ist, wobei das 3/2-Wege-Ventil (5) bezüglich des Hochdruckzulaufes (1) vor dem Steuerraum (26) liegend angeordnet ist, wobei ein am Ventilkörper (6, 40, 51) ausgebildeter Sitzabschnitt (7) im Gehäuse (4) in seinen Ventilsitz (20) gestellt ist, **dadurch gekennzeichnet, dass** der Ventilkörper (6, 40, 51) des 3/2-Wege-Ventiles (5) den Sitzabschnitt (7) und einen Längsschieberabschnitt (8) aufweist, wobei der Sitzabschnitt (7) und der Längsschieberabschnitt (8) am Ventilkörper (6) einander gegenüberliegen, wobei der Ventilkörper (6, 40, 51) weiterhin die Druckausgeglichenheit des Ventilkörpers (6, 40, 51) ermöglichende, in ihren hydraulischen Flächen identische Flächen (31, 32) aufweist, wobei eine der hydraulischen Flächen (31, 32) dem Längsschieberabschnitt (8) zugeordnet ist, wobei durch den Ventilkörper (6, 40, 51) mittels des Aktors (11) ein Gesamthub durchfahrbar ist, wobei der Gesamthub einen ersten Hubweg h₁ (24) und einen zweiten Hubweg h_{ü} (23) aufweist, wobei innerhalb des ersten Hubweges h₁ (24) des Ventilkörpers (6, 40, 51) der Steuerraum (26) niederdruckseitig entlastet ist, wobei während dem ersten Hubweg h₁ (24) ein erster der Ventilräume (3, 22) mit einem zweiten der Ventilräume (3,22) hydraulisch verbunden ist, wobei nach Übergang zwischen dem ersten Hubweg h₁ (24) und dem zweiten Hubweg h_{ü} (23) die dem Längsschieberabschnitt (8) zugeordnete hydraulische Fläche (31, 32) von dem ersten der Ventilräume (3, 22) in den zweiten der Ventilräume (3, 22) eingetaucht ist und den ersten der Ventilräume (3, 22) und den zweiten der Ventilräume (3, 22) hydraulisch trennt und wobei innerhalb des zweiten Hubweges h_{ü} (23) die Hochdruckleitung (1) von der Steuerraumleitung (25) des 3/2-Wege-Ventiles (5) getrennt ist.

2. Einrichtung gemäß Anspruch 1, **dadurch gekennzeichnet, dass** das 3/2-Wege-Ventil (5) als nach außen öffnendes Ventil (43) im Gehäuse (4) eingebaut ist.

3. Einrichtung gemäß Anspruch 1, **dadurch gekennzeichnet, dass** das 3/2-Wege-Ventil (5) als nach innen öffnendes Ventil (50) im Gehäuse (4) aufgenommen ist.

4. Einrichtung gemäß Anspruch 3, **dadurch gekennzeichnet, dass** der Sitzabschnitt (7) und der Längsschieberabschnitt (8) gemeinsam im unteren Bereich des Ventilkörpers (51) ausgebildet sind.

5. Einrichtung gemäß Anspruch 4, **dadurch gekennzeichnet, dass** am Sitzabschnitt (7) des Ventilkörpers (51) eine Sitzfläche (19) ausgeführt ist, die mit einem Kegelsitz (52) innerhalb des Gehäuses (4) zusammenwirkt.

6. Einrichtung gemäß Anspruch 1, **dadurch gekennzeichnet, dass** die Ventilräume (3, 22) eine Ringkammer (3) und einen Ringraum (22) aufweisen.

7. Einrichtung gemäß Anspruch 1, **dadurch gekennzeichnet, dass** während der Druckentlastung des Steuerraums (26) die abströmende Menge innerhalb des Hubweges h₁ (24) durch ein in der Steuerraumleitung (25) aufgenommenes Drosselelement (48) begrenzbar ist.

## Claims

1. Device for actuating a control piston / a nozzle needle (27), by means of a control space (26) which is connected by means of a control space line (25) to valve spaces (3, 22) of a 3/2 directional control valve (5) whose valve body (6, 40, 51) can be switched by means of an actuator (11) and is also acted on with pressure by a restoring spring (14), with the 3/2 directional control valve (5) being arranged so as to be situated upstream of the control space (26) with respect to the high-pressure inflow (1), with a seat section (7), which is formed on the valve body (6, 40, 51), in the housing (4) being placed into its valve seat (20), **characterized in that** the valve body (6, 40, 51) of the 3/2 directional control valve (5) has the seat section (7) and a longitudinal slide section (8), with the seat section (7) and the longitudinal slide section (8) on the valve body (6) being situated opposite one another, with the valve body (6, 40, 51) also having faces (31, 32) which permit pressure equilibrium of the valve body (6, 40, 51) and are identical in terms of their hydraulic faces, with one of the hydraulic faces (31, 32) being assigned to the longitudinal slide section (8), with it being possible for the valve body (6, 40, 51) to be moved through a total stroke by means of the actuator (11), with the total stroke having a first stroke travel h₁ (24) and a second stroke travel h_{ü} (23), with the control space (26) being relieved of pressure at the low-pressure side within the first stroke travel h₁ (24) of the valve body (6, 40, 51), with a first of the valve spaces (3, 22) being hydraulically connected to a second of the valve spaces (3, 22) during the first stroke travel h₁ (24), with that hydraulic face (31, 32) which is assigned to the longitudinal slide section (8) being plunged from the first of the valve spaces (3, 22) into the second of the valve spaces (3, 22), and hydraulically separating the first of the valve spaces (3, 22) and the second of the valve spaces (3, 22), after the transition between the first stroke travel h₁ (24) and the second stroke travel h_{ü} (23), and with the high-pressure line (1) being separated from the control space line (25) of the 3/2 directional control valve (5) within the second stroke travel h_{ü} (23).

2. Device according to Claim 1, **characterized in that** the 3/2 directional control valve (5) is installed as an outwardly-opening valve (43) in the housing (4).

3. Device according to Claim 1, **characterized in that** the 3/2 directional control valve (5) is installed as an inwardly-opening valve (50) in the housing (4) .

4. Device according to Claim 3, **characterized in that** the seat section (7) and the longitudinal slide section (8) are formed together in the lower region of the valve body (51).

5. Device according to Claim 4, **characterized in that** a seat face (19) is formed on the seat section (7) of the valve body (51), which seat face (19) interacts with a conical seat (52) within the housing (4).

6. Device according to Claim 1, **characterized in that** the valve spaces (3, 22) have an annular chamber (3) and an annular space (22).

7. Device according to Claim 1, **characterized in that**, during the pressure release of the control space (26), the outflowing quantity within the stroke travel h₁ (24) can be limited by a throttle element (48) which is held in the control space line (25).

## Revendications

1. Installation d'actionnement d'une aiguille d'injecteur (27) piston de commande par une chambre de commande (26) reliée par une conduite de chambre de commande (25) aux chambres de vanne (3, 22) d'une vanne à 3 / 2 voies (5) dont le corps de vanne (6, 40, 51) est commuté par un actionneur en étant sollicité par un ressort de rappel (14),
la vanne à 3/2 voies (5) est installée couchée en amont de la chambre de commande (26) par rapport à l'arrivée haute pression (2),
un segment de siège (7) réalisé sur le corps de vanne (6, 40, 51) est disposé debout dans son siège de soupape (20) dans le boîtier (4),
**caractérisé en ce que**
le corps (6, 40, 51) de la vanne à 3/2 voies (5) comporte le segment de siège (7) et le segment de tiroir longitudinal (8),
le segment de siège (7) et le tiroir longitudinal (8) se faisant face sur le corps de vanne (6),
le corps de vanne (6, 40, 51) ayant des surfaces (31, 32) hydrauliquement identiques, permettant l'équilibrage de la pression du corps de vanne (6, 40, 51),
l'une des surfaces hydrauliques (31, 32) état associée au segment de tiroir longitudinal (8),
le corps de vanne (6, 40, 51) parcourant une course totale avec l'actionneur (11),
la course totale se composant d'une première course h₁ (24) et d'une seconde course h_{ü} (23), et
au cours de la première course h₁ (24) du corps de vanne (6, 40, 51), la chambre de commande (26) est déchargée côté basse pression,
pendant la première course h₁ (24) une première des chambres de vanne (3, 22) est reliée hydrauliquement à la seconde des chambres (3, 22),
après passage entre la première course h₁ (24) et la seconde course h_{ü} (23), la surface hydraulique (31, 32) associée au segment de tiroir longitudinal (8) passe de la première chambre de vanne (3, 22) dans la seconde chambre de vanne (3, 22) et coupe hydrauliquement la première chambre de vanne (3, 22) et la seconde chambre de vanne 3, 22) et
au cours de la seconde course h_{ü} (23), la conduite de pression (1) est séparée de la conduite de la chambre de commande (25) par la vanne à 3/2 voies (5).

2. Installation selon la revendication 1,
**caractérisée en ce que**
la vanne à 3/2 voies (5) est installée dans le boîtier (4) comme vanne s'ouvrant vers l'extérieur (43).

3. Installation selon la revendication 1,
**caractérisée en ce que**
la vanne à 3/2 voies (5) est logée dans le boîtier (4) comme vanne s'ouvrant vers l'intérieur (50).

4. Installation selon la revendication 3,
**caractérisée en ce que**
le segment de siège (7) et le segment de tiroir longitudinal (8) sont réalisés en commun dans la zone intérieure du corps de vanne (51).

5. Installation selon la revendication 4,
**caractérisée en ce que**
le segment de siège (7) du corps de vanne (51) comporte une surface de siège (19) coopérant avec un siège conique (52) du boîtier (4).

6. Installation selon la revendication 1,
**caractérisée en ce que**
les chambres de vanne (3, 22) comprennent une chambre annulaire (3) et une chambre annulaire (22).

7. Installation selon la revendication 1,
**caractérisée en ce qu'**
au cours de la décharge en pression de la chambre de commande (26), le volume sortant au cours de la course h₁ (24) est limité par un élément d'étranglement (48) logé dans la conduite de la chambre de commande (25).
